# EUROPEAN PATENT SPECIFICATION

(11) **EP 1 493 472 B1**
(45) Date of publication and mention of the grant of the patent: **11.02.2009**
(21) Application number: 03015033.8
(22) Date of filing: 02.07.2003
(51) Int. Cl.: A63F 13/12

(54) **Digital gaming device interaction with user via mobile phone**
Benutzer-Interaktion mit digitalem Spielegerät durch mobiles Telefon
Interaction de jeu digital avec les utilisateurs via téléphone mobile

(43) Date of publication of application: 05.01.2005
(73) Proprietor: Sony Ericsson Mobile Communications AB, 221 88 Lund (SE)
(72) Inventor: Karkkainen, Kari, Sony Ericsson Mobile Com. Int.AB, 85609 Aschheim-Dornach (DE)
(74) Representative: Banzer, Hans-Jörg

(56) References cited:
- US-A1- 2001 047 441
- US-B2- 6 575 829
- "Nokia 7650 Specifications" NOKIA PHONE SPECIFICATIONS, [Online] XP002267744 Retrieved from the Internet: <URL:http://www.forum.nokia.com/main/0,656 6,015_70,00.html> [retrieved on 2003-12-15] & JULIAN BRIGHT: "The Right Image" COMMUNICATIONS INTERNAL, XP009023414, January 2002 (2002-01), page 25
- "ISDN over Bluetooth standardized" AVM PRESS ANNOUNCEMENT, [Online] 15 August 2002 (2002-08-15), XP002267745 Retrieved from the Internet: <URL:http://www.avm.de/en/press/announceme nts/2002/2002_08_15_1.php3> [retrieved on 2003-12-15]

## Description

The present invention relates to a digital gaming device for playing digital games loadable into the device. The present invention further relates to a mobile terminal for a wireless telecommunication system, such as the GSM, UMTS and the GPRS system.

Digital gaming devices for playing digital games loadable into the device are well-known and established in the art. E.g., Sony Corporation manufactures and sells such devices under the trademark PlayStation™. This kind of gaming devices usually comprises a reading means for reading a game stored on a digital storing medium loaded into the gaming device. Examples are CD-ROMs and DVDs, onto which games are stored. A digital gaming device reads the digital game loaded into the reading means and displays it on a display means either being part of the gaming device or being connectable to the gaming device. The control of the game and the input of instructions is done by a corresponding input means, such as a joystick through which a user can play his or her active role in the game by inputting the respectively necessary instructions. Although the variety and particularly the display resolution of digital (video) games is steadily growing, there is a need to render the games more realistic and interesting for the user.

On the other hand mobile terminals for wireless telecommunication systems are in wide-spread use and are often not only adapted to communicate in one wireless telecommunication system, but also in two or three wireless telecommunication systems. Also, mobile terminals with extended functionalities are on the market, such as personal digital assistants adapted for communication in wireless telecommunication systems as well as for managing private and business data, schedules and so on of a user. Further, mobile terminals have been proposed which incorporate the Bluetooth technology for flexibly forming small wireless networks with other devices and to exchange data and information.

US-2003-0061606 discloses a method and apparatus to inhibit or unlock features of a device using predefined rules. These rules are transmitted to the device to be access limited by authorized mobile remote control means. The device to be access limited may be a gaming device and the remote control means may be a mobile terminal which by means of Bluetooth interface transmits the inhibit rules to the device to be access limited.

The object of the present invention is therefore to provide various possibilities to make digital games more realistic and interesting for a user.

This object is achieved by the device according to claim 1.

The present invention therefore enables the use of mobile terminals for wireless telecommunication system such as the GSM or the GPRS or any other system, in a digital game played on a digital gaming device according to the present invention. If, e.g., a character in a digital game is using a mobile terminal, such as a cell phone, in the game, the player or user who is acting as the character in the game or directing the character can use his or her mobile terminal to communicate with the character in the game either through the Bluetooth communication link the in the mobile terminal or through the GSM or USB link in the mobile terminal and the gaming device as proposed. Specifically, phone calls, SMS messages and so on can be communicated between the mobile terminal and the gaming device according to the present invention so that the digital game becomes much more realistic, interesting and versatile. Also, the use of a mobile terminal, such as a cell phone, in the game could be simulated by actually using the mobile terminal according to the present invention.

The communication module can transmit and receive signals in a wireless communication system according to the Bluetooth standard.

The communication module can transmit and receive signals in a wireless communication system according to a telecommunication standard.

Preferably the communication module transmits and receives signals in a wireless communication system according to the Bluetooth standard and a telecommunication standard.

Advantageously the first transmitting and receiving means transmit and receive signals in a wireless communication system according to a telecommunication standard.

Further, advantageously a display means displays information and an input means serves for inputting information, said display means and said input means are controlled by said controlling means so that the display means and the input means are put into a Bluetooth communication mode during a communication in the second wireless communication system according to the Bluetooth standard.

Preferably the digital gaming device is combined with the mobile terminal.

The present invention is explained in more detail in the following description in relation to the enclosed drawings, in which
Fig. 1 shows schematically a mobile terminal according to the present invention,
Fig. 2 shows schematically a digital gaming device according to the present invention,
Fig. 3 schematically shows an implementation of a Java application according to the present invention.

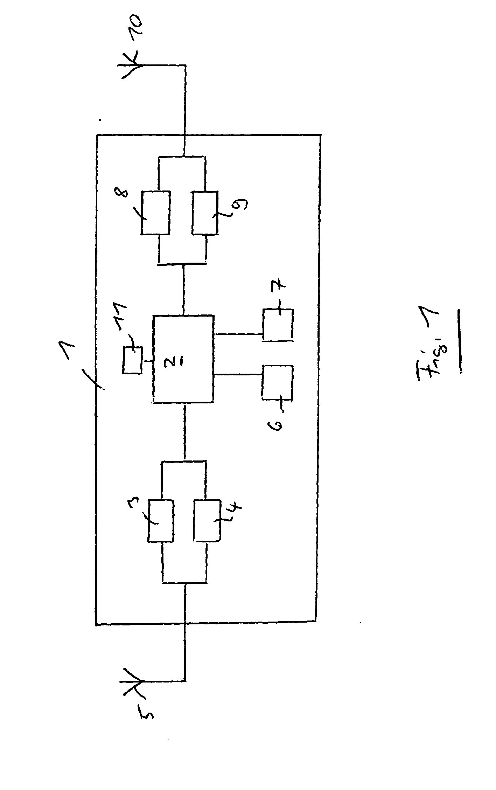

Fig. 1 schematically shows a mobile terminal 1 according to the present invention. The mobile terminal 1 is adapted to transmit and receive information in a wireless telecommunication system, such as the GSM, UMTS, GPRS or any other system for the wireless communication of information and data. The mobile terminal 1 according to the present invention can e.g. be a mobile telephone, such as a cell phone, a personal digital assistant or the like.

The mobile terminal 1 according to the present invention comprises a controlling means 2 such as a microprocessor or a baseband processor for controlling the operation of the mobile terminal 1. Part of the functionalities of the mobile terminal 1 are implemented by software, which can be stored in a memory means 11 connected to the controlling means or even part of the controlling means 2. For the transmission and the reception of speech data, user data or other data in the wireless telecommunication system, the mobile terminal 1 comprises a transmitting means 3 and a receiving means 4 connected to a transmitting and receiving antenna 5. Further, the mobile terminal 1 comprises a display means 6, such as a liquid crystal display and input means 7 for inputting information such as a keypad, for inputting information and instructions to the mobile terminal 1. All functionalities are controlled by the controlling means 2. Further elements usually comprised in a mobile terminal 1 for enabling a communication in the wireless telecommunication system are not shown for the sake of clarity.

The mobile terminal 1 further comprises elements enabling a telephone communication in a wireless communication system according to the Bluetooth standard, such as a transmitting means 8, a receiving means 9 and a transmitting and receiving antenna 10.

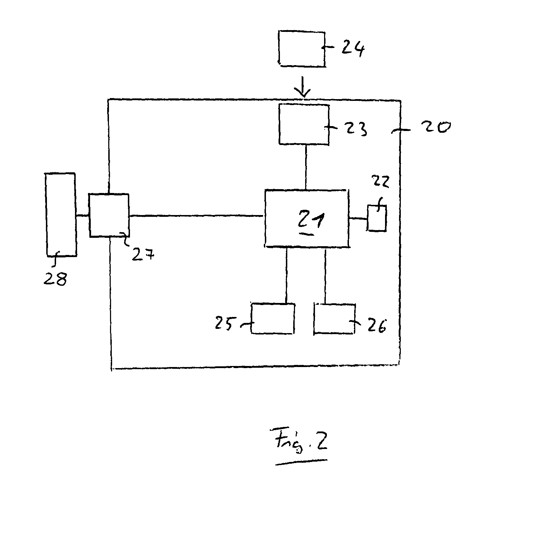

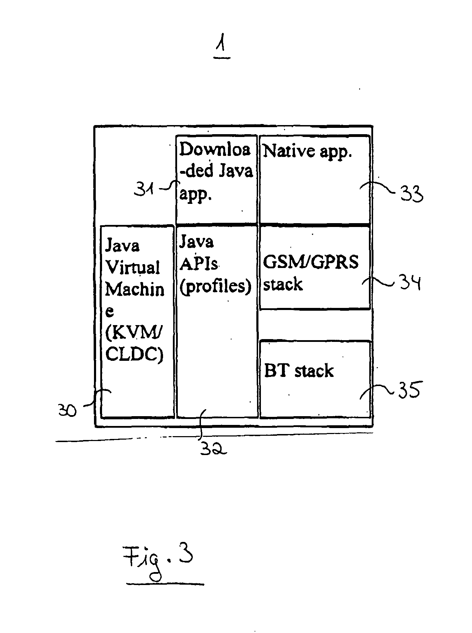

These elements and additional elements which are not shown enable the operation of the mobile terminal 1 as a telephone device in co-operation with a digital gaming device 20 as shown in and explained in relation to Fig. 2. The specific implementation of the telephone functionalities in the mobile terminal 1 for communicating with the digital gaming device 20 will be explained below in relation to Fig. 3.

Fig. 2 schematically shows a digital gaming device 20 according to the present invention. The digital gaming device 20 is adapted for playing digital games loadable into the device and can e.g. be a PlayStation™ manufactured and sold by Sony Corporation or any other similar device which allows to play digital (video) games. Hereby, the digital gaming device 20 comprises a control means 21 for controlling the operation of the digital gaming device 20 and particularly the course of a game stored on a digital storing medium 24 and loaded into a corresponding reading means 23 connected to the controlling means 21. Further, the control means controls the course of a game on the basis of instructions input via an input means 25, such as a joystick or the like. The digital gaming device 20 may further comprise a display means 26, such as a video or TV screen. Alternatively, the digital gaming device 20 may not comprise a display means but a connection interface for connecting the gaming device 20 to a TV set or the like.

The control means 21 further comprises or is connected to a memory means 22 comprising the necessary software implementations for running the gaming device 20.

Further and according to the present invention, the digital gaming device 20 comprises an insertion slot 27 connected to the control means 21 for inserting a communication module 28 for transmitting and receiving speech data, user data and so on in a first wireless telecommunication system, e.g. according to the GSM, UMTS and/or GPRS standard and/ or in a second wireless communication system according to the Bluetooth standard. The transmission and reception of data over communication module 28 and the insertion slot 27 is controlled by the controlling means 21.

The mobile terminal 1 according to the present invention and the digital gaming device 20 according to the present invention are specifically adapted to communicate with each other over the wireless telecommunication system according to the GSM or GPRS standard or over the wireless communication system according to the Bluetooth standard. If, e.g., a character in a digital game 24 played on the digital gaming device 20 is using a mobile terminal for a wireless telecommunication system, such as a cell phone, during the game, the telephone functionalities of the mobile terminal can be realised by the mobile terminal 1 on the basis of the GSM, GPRS or Bluetooth communication with the digital gaming device 20. E.g., telephone calls, SMS messages or the like transmitted from or received by the mobile terminal in the game are received or transmitted by the mobile terminal 1 over the GSM, GPRS or Bluetooth link. Hereby, the digital game can be more realistic and more interesting for the user. A user playing the game can use his or her own mobile terminal 1 to interactively participate in the game and feels more immersed into the virtual world.

With reference to Fig. 3 the implementation of the Java software in the mobile terminal 1 is explained. The mobile terminal 1 comprises a GSM/GPRS stack 34 and a Bluetooth stack 35 comprise the protocol layers necessary for enabling the mobile terminal to communicate in a GSM/GPRS or in a Bluetooth wireless communication system. The Java APIs 32 comprise the profiles for enabling the access on the GSM/GPRS stack 34 and the Bluetooth stack 35. A Java virtual machine 30 serves as a runtime environment for the different Java applications and permits the applications to be executed. In addition to the native applications 33 normally installed in a mobile terminal for enabling functionalities like calling, sending messages or using the calendar or alarm clock of the mobile terminal, additional Java applications 31 for enabling the communication with the digital gaming device can be installed after downloading them as explained below.

A first possibility for the communication module 28 is to use a Bluetooth module which has to be inserted into the insertion slot 27. Thereby the digital gaming device 20 and the mobile terminal 1 are able to communicate via Bluetooth. The Software for enabling the use of the mobile terminal 1 in a game played on the digital gaming device 20 can be implemented as a separate Java application 31 for the mobile terminal and in the digital gaming device 20 the feature may be included in the game software stored on the digital storing medium 24. The Java application 31 needed in the phone can be sold with the main game software, and can be loaded, e.g. via the Bluetooth system, to the Bluetooth enabled mobile terminal 1, which is detected by the Bluetooth communication module 28 of the digital gaming device 20 if the user selects this option via the input means 25. In this way Java applications 31 consuming precious memory space end up into the mobile terminal 1 only when needed and selected by the user.

A further possibility is the use of a GSM/GPRS and/or UMTS communication module 28. After inserting the communication module 28 into the insertion slot 27 the digital gaming device 20 acts as a terminal equipment which can be normally call / be called by the user's mobile terminal 1. The mobile terminal 1 does not require a specific piece of software (i.e. a Java application) for this communication, but this requirement can vary from game to game depending in how the communication is to be interpreted. GPRS also allows an "always on" feature, so any kind of packet data exchange between the digital gaming device 20 and the mobile terminal 1 is easily possible without incurring huge costs.

Having a dual Bluetooth and GSM/GPRS and/or UMTS communication module 28 inserted into the insertion slot 27 is a third possibility. Hereby, all the features of the above explained Bluetooth communication module 27 and the GSM/GPRS and/or UMTS communication module 27 are available: When the user is within the Bluetooth range, e.g. 10m, the Bluetooth standard is used, and when the user goes too far, e.g. leaves home, he can continue interacting with the game remotely fomr where ever the GSM/GPRS and/or UMTS network coverage.

Using a dual Bluetooth and GSM/GPRS and/or UMTS communication module 28 enables the communication between the mobile terminal 1 and the digital gaming device 20 by either calling, sending messages, e.g. SMS or MMS, or by exchanging any kind of data packets.

Further, one or more players can interact with the digital gaming device or even with each other at the same time via a Bluetooth piconet depending on the game requirements.

Hereby, the mobile terminal 1 comprises a special game playing mode in which the operation of the mobile terminal, i.e. input of instructions/data, display of information, transmission and reception of voice data, SMS messages and so on, is identical or very similar to the usual operation in the wireless telecommunication system. For the user of the mobile terminal 1, however, the special game playing mode should be visible, either by a display which is completely different from the normal display during the operation in the wireless telecommunication system, or a different colour or any other suitable distinction. The mobile terminal 1 can hereby be easily switched between the gaming mode and the normal operation mode by pressing a single key. Specifically, if during the game playing mode a telephone call in the normal wireless telecommunication system is received, the call can be picked up by simply pressing a single key.

It has to be understood that the essential functionalities of a portable cell phone, as the speech functionality, SMS messaging, input of data/instructions via the keypad, hearing ringing tones etc. are realised and applicable for the telephone communication between the mobile terminal 1 and the gaming device 20. The actual exchange of voice or data messages is done by a simulation of the cellular network protocol signalling.

## Claims

1. Mobile terminal (1) for a wireless communication system, with
first transmitting and receiving means (3; 4) for transmitting and receiving signals in a first wireless communication system which is a wireless telecommunication system,
second transmitting and receiving means (8; 9) for transmitting and receiving signals in a second wireless communication system according to the Bluetooth standard,
a controlling means (2) for controlling the operation of the mobile terminal (1) and the transmission and reception of the signals in the first and/or second wireless communication system,
**characterized in**
**that** the controlling means (2) comprises an implementation of a loadable Java application for a voice or text or other data based communication in the second wireless communication system according to the Bluetooth standard,
said mobile terminal (1) comprises a game playing mode in which a voice or text or other data based communication in the second wireless communication system according to the Bluetooth standard is established, and
said mobile terminal (1) comprises a key which, upon being pressed, picks up a call that is received in the first wireless communication system while said mobile terminal (1) is operated in said game playing mode.

2. Mobile terminal according to claim 1,
**characterized in**
**that** said game playing mode is visualized as being different from a normal operation mode in which a voice or text or other data based communication in said first wireless communication system is established.

3. Mobile terminal according to claim 1 or 2,
**characterized by**
a display means (6) for displaying information and input means (7) for inputting information, said display means (6) and said input means (7) being controlled by said controlling means (2) so that the display means (6) and the input means (7) are put into a Bluetooth communication mode during a communication in the second wireless communication system according to the Bluetooth standard.

## Patentansprüche

1. Mobiles Endgerät (1) für ein drahtloses Kommunikationssystem mit
ersten Übertragungs- und Empfangsmitteln (3; 4) zum Übertragen und Empfangen von Signalen in einem ersten drahtlosen Kommunikationssystem, welches ein drahtloses Telekommunikationssystem ist,
zweiten Übertragungs- und Empfangsmitteln (8; 9) zum Übertragen und Empfangen von Signalen in einem zweiten drahtlosen Kommunikationssystem gemäß dem Bluetooth Standard,
einem Steuermittel (2) zum Steuern des Betriebs des mobilen Endgeräts (1) und der Übertragung und dem Empfang der Signale in dem ersten und/oder zweiten drahtlosen Kommunikationssystem,
**dadurch gekennzeichnet,**
**dass** das Steuermittel (2) eine Implementierung einer ladbaren Java-Anwendung für eine Sprach- oder Text- oder sonstige Daten-basierte Kommunikation in dem zweiten drahtlosen Kommunikationssystem gemäß dem Bluetooth-Standard umfasst,
**dass** das mobile Endgerät (1) einen Spiel-Spielmodus umfasst, in welchem eine Sprach- oder Text- oder sonstige Daten-basierte Kommunikation in dem zweiten drahtlosen Kommunikationssystem gemäß dem Bluetooth-Standard eingerichtet wird, und dass das mobile Endgerät (1) eine Taste umfasst, welche, nachdem sie gedrückt wurde, einen Anruf annimmt, welcher in dem ersten drahtlosen Kommunikationssystem empfangen wird, während das mobile Endgerät (1) in dem Spiel-Spielmodus betrieben wird.

2. Mobiles Endgerät nach Anspruch 1,
**dadurch gekennzeichnet,**
**dass** der Spiel-Spielmodus unterschiedlich zu einem normalen Betriebsmodus, in welchem eine Sprach- oder Text- oder weitere Daten-basierte Kommunikation in dem ersten drahtlosen Kommunikationssystem eingerichtet ist, visualisiert wird.

3. Mobiles Endgerät nach Anspruch 1 oder 2,
**gekennzeichnet durch**
ein Anzeigemittel (6) zum Anzeigen einer Information und ein Eingabemittel (7) zum Eingeben einer Information, wobei das Anzeigemittel (6) und das Eingabemittel (7) von dem Steuermittel (2) derart gesteuert werden, dass das Anzeigemittel (6) und das Eingabemittel (7) während einer Kommunikation in dem zweiten drahtlosen Kommunikationssystem gemäß dem Bluetooth-Standard in einem Bluetooth-Kommunikationsmodus verwendet werden.

## Revendications

1. Terminal mobile (1) pour un système de communication sans fil, avec
des premiers moyens d'émission et de réception (3 ; 4) pour émettre et recevoir des signaux dans un premier système de communication sans fil qui est un système de télécommunication sans fil,
des deuxièmes moyens d'émission et de réception (8 ; 9) pour émettre et recevoir des signaux dans un deuxième système de communication sans fil selon la norme Bluetooth,
des moyens de commande (2) pour commander le fonctionnement du terminal mobile (1) et l'émission et la réception des signaux dans les premier et/ou deuxième systèmes de communication sans fil,
**caractérisé en ce que**
les moyens de commande (2) comprennent une mise en oeuvre d'une application Java chargeable pour une communication vocale ou textuelle ou d'autres données dans le deuxième système de communication sans fil selon la norme Bluetooth,
ledit terminal mobile (1) comprend un mode de jeu dans lequel une communication vocale ou textuelle ou d'autres données dans le deuxième système de communication sans fil selon la norme Bluetooth est établie, et
ledit terminal mobile (1) comprend une touche qui, lorsqu'elle est enfoncée, prend un appel qui est reçu dans le premier système de communication sans fil alors que ledit terminal mobile (1) fonctionne dans ledit mode de jeu.

2. Terminal mobile selon la revendication 1,
**caractérisé en ce que**
ledit mode de jeu est visualisé comme étant différent d'un mode de fonctionnement normal dans lequel une communication vocale ou textuelle ou d'autres données dans ledit premier système de communication sans fil est établie.

3. Terminal mobile selon la revendication 1 ou 2,
**caractérisé par**
des moyens d'affichage (6) pour afficher des informations et des moyens d'entrée (7) pour entrer des informations, lesdits moyens d'affichage (6) et lesdits moyens d'entrée (7) étant commandés par lesdits moyens de commande (2) de sorte que les moyens d'affichage (6) et les moyens d'entrée (7) soient mis dans un mode de communication Bluetooth pendant une communication dans le deuxième système de communication sans fil selon la norme Bluetooth.
